# FASCICULE DE BREVET EUROPEEN

(11) **EP 0 704 735 B1**
(45) Date de publication et mention de la délivrance du brevet: **17.04.2002**
(21) Numéro de dépôt: 95402166.3
(22) Date de dépôt: 27.09.1995
(51) Int. Cl.: G02B 6/44, H01H 33/42, H01B 17/00

(54) **Un isolateur électrique équipé de fibres optiques et son procédé de fabrication**
Elektrischer Isolator mit optischen Fasern und zugehöriges Herstellungsverfahren
Electrical insulator with optical fibres and manufacturing process

(30) Priorité: 30.09.1994 FR 9411726
(43) Date de publication de la demande: 03.04.1996
(73) Titulaire: SEDIVER, SOCIETE EUROPEENNE D'ISOLATEURS EN VERRE ET COMPOSITE, F-92017 Nanterre Cédex (FR)
(72) Inventeur: Joulie, René, F-03700 Bellevue sur Allier (FR); Bourdier, Gilles, F-63310 Beaumont les Randans (FR)
(74) Mandataire: Prugneau, Philippe

(56) Documents cités:
- EP-A- 0 182 575
- DE-C- 4 227 410
- DE-U- 8 914 972
- US-A- 4 802 731
- PATENT ABSTRACTS OF JAPAN vol. 010 no. 089 (P-444) ,8 Avril 1986 & JP-A-60 225806 (FUJIKURA DENSEN KK) 11 Novembre 1985,
- PATENT ABSTRACTS OF JAPAN vol. 010 no. 143 (P-459) ,27 Mai 1986 & JP-A-60 262103 (TOKYO DENRYOKU KK;OTHERS: 02) 25 Décembre 1985,

## Description

L'invention porte sur un isolateur électrique comprenant un élément support ayant une paroi extérieure qui s'étend suivant un axe longitudinal entre deux extrémités, deux ferrures scellées respectivement aux extrémités de l'élément support sur des portées formées dans la paroi extérieure de celui-ci et un guide d'onde optique qui est mis en place à l'intérieur de l'isolateur pour s'étendre d'une extrémité à l'autre de celui-ci et traverser les deux ferrures. Un tel isolateur est connu par le document JP 60-225 806

Un isolateur électrique du genre indiqué ci-dessus est destiné en particulier pour servir d'organe support isolant à une installation extérieure haute tension comme décrit dans le document US-4802731.

Ce document divulgue une première disposition selon laquelle le guide d'onde optique est mis en place dans le volume intérieur de l'élément support constitué d'un tube stratifié, suivant un trajet linéaire ou même hélicoïdal. Toutefois, le volume intérieur du tube est généralement rempli d'un gaz diélectrique sous pression, comme du SF6, pour éviter les phénomènes d'amorçage d'arcs électriques entre l'extrémité de haut potentiel de l'isolateur et l'extrémité de bas potentiel de l'isolateur. Il s'ensuit que cette disposition du guide d'onde optique implique des problèmes d'étanchéité puisque le guide d'onde optique doit passer du volume intérieur du tube à l'extérieur du tube.

Le document cité ci-dessus divulgue encore une disposition selon laquelle le guide d'onde optique est noyé dans l'épaisseur du tube stratifié. En fait il est proposé de combiner l'enroulement filamentaire pour la fabrication du tube stratifié avec un enroulement du guide d'onde optique. Un tel procédé s'avère en pratique très difficile à mettre en oeuvre notamment parce que le guide d'onde optique doit subir des contraintes tant mécaniques que thermiques lors de l'opération de chauffage du tube qui suit l'enroulement filamentaire. De plus, il s'avère difficile de maintenir une extrémité du guide d'onde optique alors qu'on procède à son enroulement, gérer le retournement de l'enroulement filamentaire en même temps que l'enroulement du guide d'onde optique. En plus, les extrémités du tube doivent être tronçonnées ce qui est délicat en présence du guide d'onde optique.

Le document cité ci-dessus propose encore de noyer le guide d'onde optique dans le matériau élastomère qui revêt le tube stratifié et qui constitue les ailettes isolantes. Mais là encore, un tel procédé s'avère très difficile à mettre en oeuvre quand les ailettes de l'isolateur sont constituées par une bande continue en matériau élastomère obtenue par extrusion et qui est enroulée en hélice autour du tube. De plus, ce procédé implique que le pas d'enroulement du guide d'onde optique autour du tube soit identique au pas d'enroulement de la bande continue extrudée qui constitue les ailettes. Or il s'avère nécessaire de pouvoir faire varier la longueur du guide d'onde entre les deux extrémités du tube indépendamment du nombre d'ailettes pour adapter le gradient de la tension électrique admissible qui est établie dans le guide d'onde optique.

Le but de l'invention est de proposer un isolateur électrique qui ne présente pas les inconvénients indiqués ci-dessus et qui est simple à réaliser ainsi qu'un procédé de fabrication d'un tel isolateur.

Selon l'invention, le guide d'onde optique s'étend dans le fond d'une rainure hélicoïdale et de deux rainures circulaires s'enroulant autour de l'axe longitudinal de l'élément support, par exemple un tube stratifié. Les rainures sont formées dans la paroi extérieure de l'élément support. Chaque rainure circulaire prolonge une des extrémités de la rainure hélicoïdale et fait partie d'une portée sur laquelle est scellée la ferrure correspondante. Le guide d'onde optique est noyé dans le matériau élastomère qui remplit ces rainures. Pour fabriquer cet isolateur, on usine l'élément support pour former les portées des ferrures qui définissent aussi les rainures circulaires. Après le scellement des ferrures; on usine l'élément support pour former la rainure hélicoïdale. Ensuite, une bande continue en matériau élastomère est mise en place dans les rainures. Puis le guide d'onde optique est déposé sur le dessus et le long de cette bande continue. Enfin, on exerce une pression sur le dessus de la bande continue de sorte à noyer le guide d'onde optique dans le matériau élastomère au fond des rainures.

Cette disposition assure un positionnement stable du guide d'onde. Il est possible de mettre en place un guide d'onde optique constitué d'un grand nombre de fibres optiques.

Un mode de réalisation de l'invention est décrit ci-dessous en référence aux dessins annexés.

La figure 1 est une vue schématique partiellement coupée d'un tube stratifié équipé d'une paire de ferrures constituant une partie d'un isolateur électrique.

La figure 2 montre schématiquement le tube de la figure 1 dans lequel est aménagée une rainure hélicoïdale pour le passage d'un guide d'onde optique.

La figure 3 montre schématiquement, en coupe axiale, une partie du tube de la figure 2 avec la rainure dans laquelle est déposée la première bande en matériau élastomère.

La figure 4 montre schématiquement la partie du tube de la figure 3 mais avec le guide d'onde optique déposé sur la première bande en matériau élastomère.

La figure 5 montre schématiquement la partie du tube de la figure 4 mais avec le guide d'onde optique noyé dans le matériau élastomère.

La figure 6 montre schématiquement le tube de la figure 2 une fois que le guide d'onde optique est noyé dans le matériau élastomère.

La figure 7 montre schématiquement l'isolateur électrique avec son revêtement final en matériau élastomère constituant des ailettes.

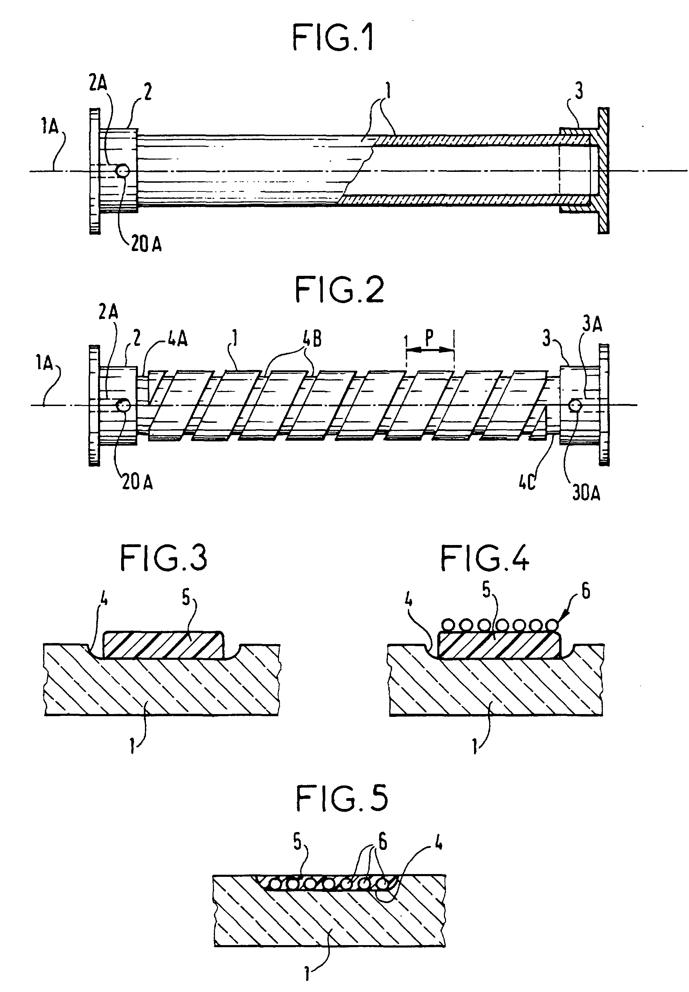

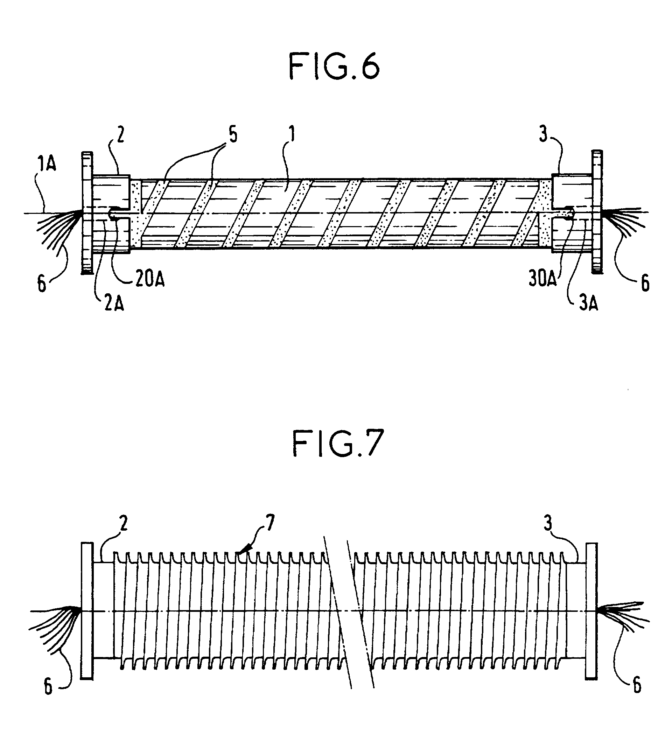

L'isolateur électrique montré à la figure 7 comporte un tube stratifié 1 visible à la figure 1. Ce tube stratifié 1 est obtenu par enroulement de fibres ou fils minéraux ou organiques, comme la fibre de verre, sur un mandrin non représenté.

Les fils ou fibres sont agglomérées en couches successives par une résine synthétique durcissable. Le tube 1 peut prendre une forme cylindrique comme montrée à la figure 1, tronconique, bitronconique ou autre.

Le mandrin avec le tube stratifié 1 est amené à l'intérieur d'une étuve chauffante pour polymériser la résine synthétique. L'ensemble est ensuite sorti de l'étuve et les extrémités du tube stratifié 1 sont tronçonnées pour obtenir la longueur axiale voulue du tube. Celle-ci est de l'ordre de quelques mètres lorsque l'isolateur électrique sert de support fixe à une installation à haute tension. A noter que le tube stratifié 1 (notamment quand il s'agit d'une tube cylindrique) sur le mandrin peut être tronçonné en plusieurs endroits pour obtenir plusieurs tubes stratifiés ayant chacun une longueur axiale voulue.

Le mandrin est ensuite extrait du tube stratifié 1 (ou des tubes stratifiés obtenus après tronçonnage comme indiqué ci-dessus).

Deux ferrures 2 et 3 sont insérées respectivement aux deux extrémités du tube et scellées chacune à l'aide d'un agent collant sur une portée du tube. Chaque portée cylindrique est venue d'usinage de la surface extérieure d'extrémité du tube. A noter que les deux ferrures présentent dans leur paroi respectivement des passages 2A et 3A représentés de façon schématique sur les figures, qui s'étendent sensiblement parallèlement à l'axe 1A quand les ferrures sont insérées sur le tube. Il est entendu que chaque passage débouche uniquement vers l'extérieur du tube.

Le tube stratifié 1 équipé des deux ferrures 2 et 3 est monté sur un tour non représenté, les ferrures étant prises dans les mors du tour. Il est usiné par fraisage de manière à former dans la paroi du tube une rainure 4B qui s'enroule en hélice autour de l'axe longitudinal 1A du tube. Les extrémités de la rainure 4B sont en alignement suivant l'axe 1A avec les ouvertures 20A,30A des passages 2A et 3A (ouvertures placées du côté du milieu du tube sur la figure 2) dans les ferrures, l'alignement étant obtenu facilement par un réglage du pas (constant ou variable) de l'enroulement de la rainure 4B. A noter que la rainure hélicoïdale 4B est avantageusement prolongée à ses deux extrémités respectivement par deux rainures circulaires 4A et 4C qui sont réalisées à proximité du bord intérieur de chaque ferrure qui est placé du côté du milieu du tube. cette disposition permet de s'affranchir du réglage du pas P d'enroulement de la rainure 4B quelque que soit la position relative des passages dans les ferrures. Le tube stratifié 1 avec les rainures 4A,4B et 4C est montré à la figure 2. A noter encore que les rainures 4A,4B et 4C sont réalisées sur la surface extérieure "cylindrique" du tube stratifié. Chaque rainure circulaire 4A et 4C fait partie de la portée sur laquelle est insérée une ferrure, cette portée ayant été usinée avant le scellement des ferrures sur le tube comme indiqué plus haut, ce qui simplifie la fabrication de l'isolateur électrique.

Il est entendu que l'épaisseur de la paroi du tube stratifiée est prévue de façon à tenir les contraintes mécaniques requises en présence des rainures 4A à 4C. La profondeur des rainures 4A à 4C doit en outre être suffisante pour accueillir un guide d'onde optique tel qu'un faisceau de fibres optiques 6 comme décrit par la suite.

Après réalisation de la rainure 4B, une bande 5 en matériau élastomère, à section complémentaire à la section de chaque rainure 4A,4B,4C et obtenue par extrusion, est déposée dans la ou les rainures 4A,4B,4C le long de celle(s)-ci, par un enroulement en hélice, comme montré à la figure 3.

Ensuite, un faisceau de fibres optiques 6, de préférence en nappe, est enfilé, par une de ses extrémités dans le passage 20A, par exemple, de la ferrure 2. Puis, il est déposé sur le dessus de la bande 5, par un enroulement en hélice, comme montré à la figure 4. L'autre extrémité du faisceau de fibres optiques est ensuite enfilée dans le passage 3A de la ferrure 3.

Les fibres optiques 6 sont ensuite noyées à l'intérieur de la bande 5 par écrasement de l'ensemble (fibres optiques et bande) à l'aide d'un galet de pression qui roule le long des rainures 4A,4B et 4C. La pression exercée par le galet sur le tube est éventuellement réglable. De cette façon, les fibres optiques 6 sont plaquées dans le fond de la rainure 4 (en fait 4A,4B et 4C) qui est remplie complètement du matériau élastomère 5 comme montré à la figure 5 de sorte à obtenir une surface extérieure du tube 1 qui soit uniforme. La figure 6 montre l'aspect extérieur du tube après l'opération de roulage avec les fibres optiques 6 qui débouchent aux deux extrémités du tube au travers des ferrures 2 et 3. A noter que si le tour sur lequel est monté le tube 1 entraîne en rotation celui-ci autour de son axe 1A, il est avantageux de réaliser en même temps le dépôt des fibres optiques 6 sur la bande 5 (par enroulement) et l'écrasement de ces fibres optiques et de la bande de sorte à réduire le temps de fabrication de l'isolateur.

Le tube stratifié 1 de la figure 6 équipé des fibres optiques 6 est ensuite revêtu d'un matériau élastomère vulcanisé, tel qu'un caoutchouc éthylène-propylène ou un silicone, comme décrit dans la demande de brevet FR-2363170 de façon à former une pluralité d'ailettes isolantes 7 autour du tube 1 et obtenir l'isolateur électrique montré à la figure 7. En particulier, ces ailettes sont constituées à partir d'une bande continue du matériau élastomère qui est obtenue par extrusion et qui présente en section la forme d'un T renversé. La petite transition des fibres optiques depuis le tube 1 (en fait depuis une rainure) vers un ferrure (en fait dans un passage tel que 2A ou 3A) est recouverte par la bande en matériau élastomère qui constitue les ailettes isolantes.

Dans le procédé qui vient d'être décrit, le pas d'enroulement de la rainure peut varier le long du tube sans que cela gène la mise en place des fibres optiques dans la rainure et dans les ferrures. De plus, les différentes phases de la fabrication de l'isolateur électrique sont bien dissociées entre elles ce qui simplifie la mise en oeuvre du procédé. Il est entendu, qu'après l'écrasement de la bande 6, la surface extérieure du tube est uniforme pour obtenir une bonne adhérisation sur le tube stratifié de la bande constituant les ailettes isolantes.

## Revendications

1. Un isolateur électrique comprenant un élément support (1) ayant une paroi extérieure qui s'étend suivant un axe longitudinal (1A) entre deux extrémités, deux ferrures (2,3) scellées respectivement aux extrémités de l'élément support sur des portées formées dans la paroi extérieure de celui-ci et un guide d'onde optique (6) qui est mis en place à l'intérieur de l'isolateur pour s'étendre d'une extrémité à l'autre de celui-ci et traverser les deux ferrures, **caractérisé en ce que** ledit guide d'onde optique est logé, d'une part, dans deux rainures circulaires (4A,4C) formées dans la paroi extérieure de l'élément support et faisant partie respectivement des portées des ferrures et, d'autre part, dans une rainure hélicoïdale (4B) formée dans la paroi extérieure de l'élément support et ayant des extrémités qui débouchent respectivement dans les deux rainures circulaires (4A,4C).

2. L'isolateur selon la revendication 1, dans lequel l'élément support (1) est entouré d'un revêtement en matériau élastomère constituant une pluralité d'ailettes annulaires (7), lesdites rainures (4A,4B,4C) formées dans la paroi extérieure de l'élément support sont remplies dudit matériau élastomère et ledit guide d'onde optique (6) est noyé dans ledit matériau élastomère qui remplit lesdites rainures.

3. L'isolateur selon la revendication 1, dans lequel ladite rainure hélicoïdale (4B) s'enroule autour de l'axe longitudinal (1A) avec un pas qui varie le long de cet axe.

4. Un procédé de fabrication d'un isolateur électrique comprenant un élément support (1) ayant une paroi extérieure qui s'étend suivant un axe longitudinal (1A) entre deux extrémités, deux ferrures (2,3) scellées respectivement aux extrémités de l'élément support sur des portées formées dans la paroi extérieure de celui-ci, procédé dans lequel au moins un guide d'onde optique (6) est mis en place à l'intérieur de l'isolateur pour s'étendre d'une extrémité à l'autre de celui-ci et traverser les deux ferrures, **caractérisé par** les étapes suivantes:
- usinage de l'élément support (1) pour former, dans la paroi extérieure de celui-ci, une rainure hélicoïdale (4B) qui s'enroule en hélice autour dudit axe longitudinal (1A),
- mise en place d'une bande continue extrudée (5) en matériau élastomère dans ladite rainure hélicoïdale (4B) et le long de celle-ci,
- dépôt du guide d'onde optique (6) sur le dessus de la bande (5) et le long de ladite rainure hélicoïdale ,
- une pression est exercée sur le dessus de la bande (5) pour plaquer le guide d'onde optique dans le fond de ladite rainure hélicoïdale et le noyer dans le matériau élastomère.

5. Le procédé selon la revendication 4, comprenant en outre l'étape consistant dans l'usinage de l'élément support (1) pour former, dans la paroi extérieure de celui-ci, deux portées de scellement pour les ferrures de telle façon à former, après scellement de ces ferrures sur lesdites portées, deux rainures circulaires (4A,4C) qui s'enroulent autour dudit axe longitudinal (1A), chaque rainure circulaire étant placée à proximité du bord d'une ferrure.

6. Le procédé selon la revendication 4, dans lequel l'étape de dépôt du guide d'onde optique (6) sur le dessus de la bande en matériau élastomère (5) et l'étape selon laquelle on exerce une pression sur le dessus de la bande (5) sont réalisées en même temps.

7. Le procédé selon la revendication 6, dans lequel l'élément support est entraîné en rotation autour dudit axe longitudinal (1A) pendant l'étape de dépôt de ladite bande en matériau élastomère (5) et l'étape selon laquelle on exerce une pression sur le dessus de la bande.

## Claims

1. Electrical isolator comprising a support member (1) having an outer wall which extends along a longitudinal axis (1A) between two ends, two fittings (2,3) which are bedded into respective ends of the support member on bearing surfaces formed in the outer wall thereof, and an optical waveguide (6) which is positioned within the isolator to extend from one end to the other thereof and to pass through the two fittings, **characterised in that** said optical waveguide is housed on the one hand in two circular grooves (4A,4C) which are formed in the outer wall of the support member and which form part of respective ones of the bearing surfaces for the fittings, and on the other hand in a helical groove (4B) which is formed in the outer wall of the support member and which has ends which open into respective ones of the two circular grooves (4A,4C).

2. Isolator according to claim 1 in which the support member (1) is surrounded by a coating of elastomeric material forming a plurality of annular vanes (7), said grooves (4A,4B,4C) formed in the outer wall of the support member being filled with said elastomeric material and said optical waveguide (6) being embedded in said elastomeric material which fills said grooves.

3. Isolator according to claim 1 in which said helical groove (4B) circles round the longitudinal axis (1A) at a pitch which varies along the axis.

4. Method of producing an electrical isolator comprising a support member (1) having an outer wall which extends along a longitudinal axis (1A) between two ends, two fittings (2,3) which are bedded into respective ends of the support member on bearing surfaces formed in the outer wall thereof, and at least one optical waveguide (6) which is positioned within the isolator to extend from one end to the other thereof and to pass through the two fittings, **characterised by** the following steps:
- machining of the support member (1) to form, in the outer wall thereof, a helical groove (4B) which circles in helical fashion around said longitudinal axis (1A),
- fitting of a continuous extruded strip (5) of elastomeric material into and along said helical groove (4B),
- laying down of the optical waveguide (6) on the top of the strip (5) and along said helical groove,
- a pressure being exerted on the top of the strip (5) to set the optical waveguide into the bottom of said helical groove and embed it in the elastomeric material.

5. Method according to claim 4, also comprising the stage consisting of machining the support member (1) to form, in the outer wall thereof, two bearing surfaces for bedding in the fittings in such a way as to form, after the fittings have been bedded in on said bearing surfaces, two circular grooves (4A,4C) which circle around said longitudinal axis (1A), each circular groove being positioned close to the edge of a fitting.

6. Method according to claim 4, in which the stage of laying down the optical waveguide (6) on the top of the strip of elastomeric material (5) and the stage in which a pressure is exerted on the top of the strip (5) are carried out at the same time.

7. Method according to claim 6, in which the support member is driven in rotation about said longitudinal axis (1A) during the stage of laying down said strip of elastomeric material (5) and the stage in which a pressure is exerted on the top of the strip.

## Patentansprüche

1. Elektrischer lsolator, umfassend ein Stützelement (1) mit einer Aussenwandung, der sich gemäss einer Längsachse (1A) zwischen zwei Enden erstreckt, zwei Beschläge (2, 3), die jeweils an den Enden des Stützelements auf in dessen Aussenwandung gebildeten Stirnseiten festgelegt sind, und einen Lichtwellenleiter (6), der innerhalb des lsolators angeordnet ist, um sich von dessen einem Ende zu dessen anderem Ende zu erstrecken und die beiden Beschläge zu durchsetzen, **dadurch gekennzeichnet,**
**dass** der Lichtwellenleiter einerseits in zwei kreisförmigen Nuten (4A, 4C), die in der Aussenwandung des Stützelements gebildet sind und die jeweils Teil bilden der Stirnseiten der Beschläge, und andererseits in einer schraubenförmigen Nut (4B), die in der Aussenwandung des Stützelements gebildet ist und die Enden aufweist, die jeweils in die beiden kreisförmigen Nuten (4A, 4C) einmünden, angeordnet ist.

2. Isolator nach Anspruch 1, bei dem das Stützelement (1) von einem Überzug aus Elastomermaterial umgeben ist, welcher eine Mehrzahl von ringförmigen Rippen (7) bildet, wobei die Nuten (4A, 4B, 4C), die in der äusseren Wandung des Stützelements gebildet sind, mit dem Elastomermaterial ausgefüllt sind, wobei der Lichtwellenleiter (6) in dem Elastomermaterial versenkt ist, welches die Nuten ausfüllt.

3. Isolator nach Anspruch 1, bei dem die schraubenförmige Nut (4B) sich um die Längsachse (1A) wickelt mit einem Wicklungsschritt, der sich entlang der Achse ändert.

4. Verfahren zur Herstellung eines elektrischen Isolators, umfassend ein Stützelement (1) mit einer äusseren Wandung, die sich entlang einer Längsachse (1A) zwischen zwei Enden erstreckt, zwei Beschläge (2, 3), die jeweils an den Enden des Stützelements auf in dessen Aussenwandung gebildeten Stirnseiten festgelegt sind, wobei bei dem Verfahren wenigstens ein Lichtwellenleiter (6) innerhalb des lsolators angeordnet wird, um sich von dessen einem Ende zu dessen anderem Ende zu erstrecken und die beiden Beschläge zu durchsetzen, **gekennzeichnet durch** die folgenden Schritte:
- Fertigen des Stützelements (1) zum Bilden, in dessen Aussenwandung, einer schraubenförmigen Nut (4B), die sich schraubenförmig um die Längsachse (1A) dreht,
- Anordnen eines extrudierten kontinuierlichen Bandes (5) aus Elastomermaterial in der schraubenförmigen Nut (4B) und entlang dieser,
- Deponieren des Lichtwellenleiters (6) auf der Oberseite des Bandes (5) und entlang der schraubenförmigen Nut,
- Ausüben eines Drucks auf die Oberseite des Bandes (5), um den Lichtwellenleiter in den Grund der schraubenförmigen Nut zu rücken und ihn in dem Elastomermaterial zu versenken.

5. Verfahren nach Anspruch 4, umfassend ferner den Schritt, der in dem Fertigen des Stützelements (1) besteht, um in dessen äusserer Wandung zwei Stirnseiten für die Festlegung für die Beschläge derart zu bilden, dass nach dem Festlegen dieser Beschläge auf den Stirnseiten zwei kreisförmige Nuten (4A, 4C), welche sich um die Längsachse (1A) drehen, gebildet werden, wobei jede kreisförmige Nut in der Nähe des Randes eines Beschlags angeordnet ist.

6. Verfahren nach Anspruch 4, bei dem der Schritt des Deponierens des Lichtwellenleiters (6) auf der Oberseite des Bandes aus Elastomermaterial (5) und der Schritt, wonach ein Druck auf die Oberseite des Bandes (5) ausgeübt wird, gleichzeitig ausgeführt werden.

7. Verfahren nach Anspruch 6, bei dem während des Schritts Deponieren des Bandes aus Elastomermaterial (5) und des Schritts Ausüben von Druck auf die Oberseite des Bandes das Stützelement in Drehbewegung um die Längsachse (1A) angetrieben wird.
